# EUROPEAN PATENT SPECIFICATION

(11) **EP 4 624 319 B1**
(45) Date of publication and mention of the grant of the patent: **21.10.2026**
(21) Application number: 24166670.0
(22) Date of filing: 27.03.2024
(51) Int. Cl.: B64C 1/06, B64D 13/06

(54) **CARGO LINING ASSEMBLY FOR AN AIRCRAFT WITH VENTILATION**
FRACHTRAUMAUSKLEIDUNG FÜR EIN FLUGZEUG MIT BELÜFTUNG
REVÊTEMENT DE SOUTE POUR UN AÉRONEF AVEC VENTILATION

(43) Date of publication of application: 01.10.2025
(73) Proprietor: Airbus Operations GmbH, 21129 Hamburg (DE)
(72) Inventor: Lohmar, Jens, 21129 Hamburg (DE); Bliemeister, Frank, 21129 Hamburg (DE)
(74) Representative: Schornack, Oliver

(56) References cited:
- EP-B2- 1 874 625
- US-A- 2 694 537
- US-B2- 10 155 589

## Description

The present disclosure generally relates to a cargo hold lining assembly, an aircraft section and an aircraft having a cargo hold lining assembly. Particularly, the present disclosure relates to a cargo hold lining assembly having a ventilation inlet and outlet and an air recirculation system that is independent from the ventilation inlet and ventilation outlet. Furthermore, the present disclosure also relates to an aircraft section and an aircraft having such cargo hold lining assembly.

Air circulation is required in certain compartments of an aircraft. For instance, US 10,155,589 B2 relates to a cooling compartment for mobile trolleys, the cooling compartment having an access opening at the front, a rear wall opposite to the opening and a worktop. A cooling air inlet and a cooling air outlet are provided in the cooling compartment. In addition, a conveying device is arranged on the rear wall of the interior of the cooling compartment, to conduct the cooling air supplied to the interior of the cooling compartment through the housing of a trolley.

Prior art document EP 1 874 625 B2 deals with a cargo compartment recirculation system for an aircraft, the system including an air moving device fluidly coupled to the cargo compartment and operable to move an air volume, and an air heating device and an air cooling device fluidly coupled to the compartment. A recirculation duct is fluidly coupled to the air moving device and configured to selectively direct at least a portion of the volume to the air heater and the air cooler.

A conventional cargo space or cargo hold of an aircraft is surrounded by an airtight lining, for example, in order to achieve an underpressure inside the cargo hold to ensure that smoke or fire is kept in the cargo hold and is not distributed in the aircraft. The underpressure as well as air ventilation and heating is achieved via a ventilation and heating system. For instance, multiple air inlets (a supply portion) are located on a longitudinal side of the cargo space and multiple air outlets (an extraction portion) are provided on an opposite longitudinal side of the cargo space.

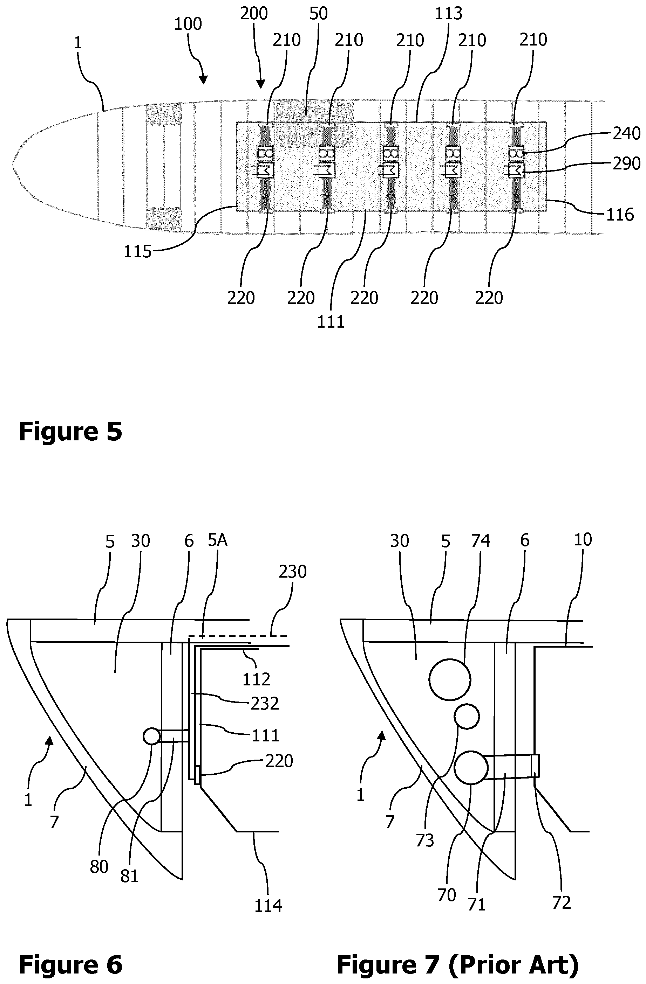

Figure 7 exemplarily illustrates a cross-section of a conventional aircraft section including a portion of the cargo hold 10. Specifically, the cargo hold 10 is arranged underneath a cabin floor 5 and next to a triangle area 30, which is delimited by the cabin floor 5, a portion of a frame 7 and a vertical strut (Z-strut) 6. Such triangle area 30 runs along the cargo hold 10 and aircraft fuselage 1. As a mere example, the longitudinal side panels of the lining 10 are parallel to the Z-strut 6 and/or can be mounted to the Z-strut 6. It is to be understood that on a transverse opposite side (to the right in Figure 7), the cargo hold 10 is likewise adjacent to a corresponding triangle area.

The interior space of the cargo hold 10 is supplied with air via the multiple air inlets 72 and air is extracted therefrom via the multiple outlets (on the opposite side not illustrated but corresponding to air inlets 72). Each of the air inlets and outlets 72 are connected to a respective air duct 70 provided in the respective triangle area 30 of the aircraft fuselage 1. A connecting duct 71 is provided between the air duct 70 and the inlet/outlet 72.

Furthermore, the supply air in duct 70 can be heated via a trim air tapping that can be connected to a trim air duct 73. Trim air is hot air supplied by a bleed system of the aircraft, such as bleed air from an aircraft engine (not illustrated). This, however, requires bleed air ducts 74 to be arranged in the triangle area 30 or at least close to the cargo hold 10. Thus, trim air tapping requires significant ducting 70, 71, 73, 74, and increases fuel consumption of the aircraft engine.

It is therefore an object of the present disclosure to provide an improved cargo hold ventilation that is saving energy and is lightweight.

This object is solved by the present invention as defined in the independent claim.

Preferred embodiments are defined by the dependent claims.

According to a first aspect to better understand the present disclosure, a cargo hold lining assembly for an aircraft comprises a first longitudinal sidewall, a second longitudinal sidewall arranged parallel to the first longitudinal sidewall, a first transverse sidewall connecting the first and second longitudinal sidewalls, a second transverse sidewall connecting the first and second longitudinal sidewalls, a ceiling panel connecting the first and second longitudinal sidewalls and the first and second transverse sidewalls. The cargo hold lining assembly, hence, forms a hull of the cargo hold or cargo space surrounding and/or enclosing four sides and the top of the cargo hold.

The cargo hold lining assembly further comprises a ventilation inlet arranged in the first transverse sidewall, and a ventilation outlet arranged in the second longitudinal sidewall or in the second transverse sidewall. Thus, ventilation is performed in the cargo hold by introducing air at the first transverse sidewall and extracting air at the ventilation outlet either at the second longitudinal sidewall or the second transverse sidewall. It is to be understood that the ventilation outlet can be provided at a portion of the second longitudinal sidewall spaced apart from the second transverse sidewall, in order to have the air stream between ventilation inlet and ventilation outlet covering a predefined portion of the interior volume of the cargo hold. In other words, in order to achieve a good ventilation, a direct line between the ventilation inlet and ventilation outlet should cover the predefined portion of the cargo hold.

As a mere example, the ventilation outlet can be arranged in a middle region of the second longitudinal sidewall or in a half of the second longitudinal sidewall spaced apart from the first transverse sidewall and, for example, intersecting with the second transverse sidewall.

In case of the ventilation outlet being arranged in the second transverse sidewall, the entire cargo hold lies between the ventilation inlet and ventilation outlet, as the first and second transverse sidewalls are arranged opposite to one another when viewing along a longitudinal direction of the cargo hold.

In any case, the cargo hold lining assembly further comprises an air recirculation system that is independent from the ventilation inlet and the ventilation outlet. In other words, the air recirculation system is provided in such a manner that it does not supply or exhaust air via the ventilation inlet and the ventilation outlet. Therefore, the ventilation inlet can solely be used for providing fresh air into the cargo hold and/or maintaining a predetermined (low) pressure inside of the cargo hold. The distribution of the air in the cargo hold, particularly any fresh air provided thereto via the ventilation inlet, can take place anywhere along the cargo hold by a separate recirculation system.

Such cargo hold lining assembly allows omitting any supply air duct and any exhaust air duct running parallel to the cargo hold in a longitudinal direction thereof. This frees the space in the triangle area on both sides of the cargo hold by omitting such respective air duct(s). Thus, the ventilation of the cargo hold can be achieved in a lightweight design, since long ducts are not required. Solely the ventilation inlet requires a supply air duct and the ventilation outlet requires an exhaust air duct. However, the air stream inside of the cargo hold replaces a conventional supply duct and exhaust duct, each being as long as the cargo hold.

In addition, the free space in the triangle area can be used for other purposes. As a mere example, as more and more electric components will be present in an aircraft, the triangle area can be employed for this purpose.

In an implementation variant, the cargo hold lining assembly, particularly the sidewalls and the ceiling panel can be connected to one another in an airtight manner. Thus, the sidewalls and panel forming the cargo hold form a (large) air duct between the ventilation inlet and ventilation outlet, which makes any air duct in the triangle areas superfluous.

In an implementation variant, the cargo hold lining assembly can further comprise a bottom panel connecting the first and second longitudinal sidewalls and the first and second transverse sidewalls. The bottom panel being opposite to the ceiling panel forms a bottom and/or floor of the cargo hold. The bottom panel can likewise be connected to the sidewalls in an airtight manner.

In an implementation variant, access to the interior space of the cargo hold can be achieved by a door or closure in the first and/or second longitudinal sidewall. Such door or closure can be configured to close an access opening in the respective longitudinal sidewall in an airtight manner. As a mere example, the door or closure can be a separate component or can be coupled to a (conventional) aircraft cargo door, which closes the opening in the respective longitudinal sidewall when the aircraft door is in a closed position.

The air recirculation system comprises a recirculation outlet provided in one of the first longitudinal sidewall, the second longitudinal sidewall and the ceiling panel, and a recirculation inlet provided in one of the first longitudinal sidewall, the second longitudinal sidewall and the ceiling panel at a location different from the location of the recirculation outlet. In other words, the recirculation outlet and the recirculation inlet are spaced apart, as they can be provided at different locations, for example, on different panels constituting the cargo hold lining assembly, such different panels being preferably the first longitudinal sidewall, the second longitudinal sidewall, or the ceiling panel.

The air recirculation system further comprises a recirculation air duct fluidly connecting the recirculation outlet and the recirculation inlet and arranged along an outer surface of the cargo hold lining assembly, and a recirculation conveying device configured to convey air from the recirculation outlet to the recirculation inlet through the recirculation air duct. When the recirculation conveying device operates, air from the cargo hold is extracted through the recirculation outlet into the recirculation air duct, and is (re-) introduced into the cargo hold via the recirculation inlet.

Since the recirculation air duct is arranged along an outer surface of the cargo hold lining assembly, the size of the overall cargo hold lining assembly (including the recirculation air duct) can be kept small. For instance, the cargo hold lining assembly can still be provided between the Z-struts and underneath a cabin floor, like a conventional cargo hold. The triangle area is still free from any air ducts required for the cargo hold, and the air recirculation system allows for sufficient air ventilation inside of the cargo hold.

In an implementation variant, at least a portion of the recirculation air duct can be arranged on an exterior (outer) surface of the ceiling panel, in such a manner that at least a portion of the recirculation air duct overlaps with a floor beam of the cabin floor. In other words, when viewing along a longitudinal direction of the cargo hold lining assembly (and hence also of the aircraft), the recirculation air duct can be arranged at a height (at a vertical level) overlapping with a height (vertical level) of at least a bottom portion of the floor beam of the cabin floor.

In an implementation variant, the recirculation air duct is integrated into one or more of the first longitudinal sidewall, the second longitudinal sidewall and the ceiling panel. In other words, the recirculation air duct runs from the recirculation outlet to the recirculation inlet along the outer side of the cargo hold lining assembly, while at least a portion of the recirculation air duct is a part of the respective sidewall and/or ceiling panel.

In an implementation variant, the one or more of the first longitudinal sidewall, the second longitudinal sidewall and the ceiling panel forms a delimiting wall of the recirculation air duct. Thus, the inner volume of the recirculation air duct is delimited by the first longitudinal sidewall, the second longitudinal sidewall and/or the ceiling panel. As a mere example, a round, bent or U-shaped profile can be mounted on the outside or inside of the first longitudinal sidewall, the second longitudinal sidewall and/or the ceiling panel, which together fully delimit the recirculation air duct in a cross-section thereof.

In an implementation variant, the recirculation outlet and recirculation inlet can be provided both in the ceiling panel at opposite sides of the ceiling panel (viewed in a transverse direction of the cargo hold). This would allow freeing the longitudinal sidewalls from any ducting and/or inlets/outlets.

In an implementation variant, the recirculation outlet can be arranged in an upper region of the second longitudinal sidewall or in the ceiling panel, and the recirculation inlet can be arranged in a lower region of the first longitudinal sidewall. This provides for an air extraction at the recirculation outlet and an air supply at the recirculation inlet at substantially opposite portions of a cross-section of the cargo hold. Thus, an air stream inside of the cargo hold (the cargo hold lining assembly) will go through substantially the entire cross-section of the cargo hold, such as along a diagonal path in the cross-section of the cargo hold.

In an implementation variant, the cargo hold lining assembly can further comprise a heater configured to heat air in the recirculation air duct. Thus, air inside of the cargo hold can be kept at a predetermined or predefined temperature.

Alternatively or additionally, a heater can be provided at the ventilation inlet or (shortly) upstream of the ventilation inlet, such as in an air supply duct for the cargo hold.

In an implementation variant, a heat dissipating portion of the heater can be arranged in the recirculation air duct. Thus, a surface of the recirculation air duct (facing the interior volume of the recirculation air duct) can form the heat dissipation portion of the heater, i.e. can dissipate heat into the recirculation air duct.

In an implementation variant, the recirculation air duct and/or the one or more of the first longitudinal sidewall, the second longitudinal sidewall and the ceiling panel forming a delimiting wall of the recirculation air duct is made of a composite plastic material. The heat dissipating portion of the heater can then be integrated in the composite plastic material. For instance, an electrical conductive layer can be integrated into the composite plastic material, that allows generating heat in a wall of the recirculation air duct. Thus, a very compact heating component can be provided to heat the air inside of the cargo hold.

In an implementation variant, the heater can be an electric heater.

In an implementation variant, the heater can include a supply of hot air, such as a trim air tapping, i.e. a supply of bleed air that is provided into the recirculation air duct.

In an implementation variant, the ventilation outlet can be arranged in the second longitudinal sidewall, and the cargo hold lining assembly can further comprise a further ventilation inlet arranged in the second transverse sidewall. As a mere example, the ventilation outlet can be arranged in a centre region of the second longitudinal sidewall. Thus, an air supply from both transverse sidewalls achieves good ventilation of the cargo hold, as it requires only to supply air to one half of the cargo hold.

In an implementation variant, the cargo hold lining assembly can comprise a plurality of air recirculation systems arranged along the longitudinal direction of the cargo hold lining assembly. This allows not only circulation of air inside of the cargo hold lining assembly (i.e., the cargo hold). It further allows a finer control of ventilation and/or heating of longitudinal sections of the cargo hold. In addition, a heater provided with each air recirculation system can be designed smaller with respect to size and heating capacity.

According to a second aspect to better understand the present disclosure, an aircraft section comprises a cabin floor cross beam, and a cargo hold lining assembly of the first aspect or one or more of its variants.

Furthermore, at least a portion of the recirculation air duct of the cargo hold lining assembly is arranged at a vertical position (height) overlapping with a portion of the cabin floor cross beam.

In an implementation variant, the aircraft section can further comprise a vertical strut supporting the cabin floor cross beam. At least a portion of the recirculation air duct can be arranged at a horizontal position (width) overlapping with a portion of the vertical strut.

In an implementation variant, the aircraft section can further comprise a frame supporting the vertical strut, a trim air duct conveying heated or hot air, and at least one trim air connecting duct fluidly connecting the trim air duct with the recirculation air duct.

In an implementation variant, the cabin floor cross beam can be connected to the frame, the cabin floor cross beam, the vertical strut and the frame can delimit a triangle area or triangular space of the aircraft section, and the trim air duct is arranged in the triangle area or space of the aircraft section.

According to a third aspect to better understand the present disclosure, an aircraft comprises at least one cargo hold lining assembly of the first aspect or one or more of its variants.

Alternatively or additionally, the aircraft can comprise at least one aircraft section of the second aspect or one or more of its variants.

In the following, the present disclosure will further be described with reference to exemplary implementations illustrated in the figures, in which:
- Figure 1: schematically illustrates a perspective view of an exemplary cargo hold lining assembly;
- Figure 2: schematically illustrates a top view of the cargo hold lining assembly of Figure 1;
- Figure 3: schematically illustrates a perspective view of another exemplary cargo hold lining assembly;
- Figure 4: schematically illustrates a cross-sectional view and details of the cargo hold lining assembly of Figure 3;
- Figure 5: schematically illustrates a top view of a part of the cargo hold lining assembly of Figure 3;
- Figure 6: schematically illustrates an aircraft section and a portion of an exemplary cargo hold lining assembly; and
- Figure 7: schematically illustrates a conventional triangle area of an aircraft.

In the following description, for purposes of explanation and not limitation, specific details are set forth in order to provide a thorough understanding of the present disclosure. It will be apparent to one skilled in the art that the present disclosure may be practiced in other implementations that depart from these specific details.

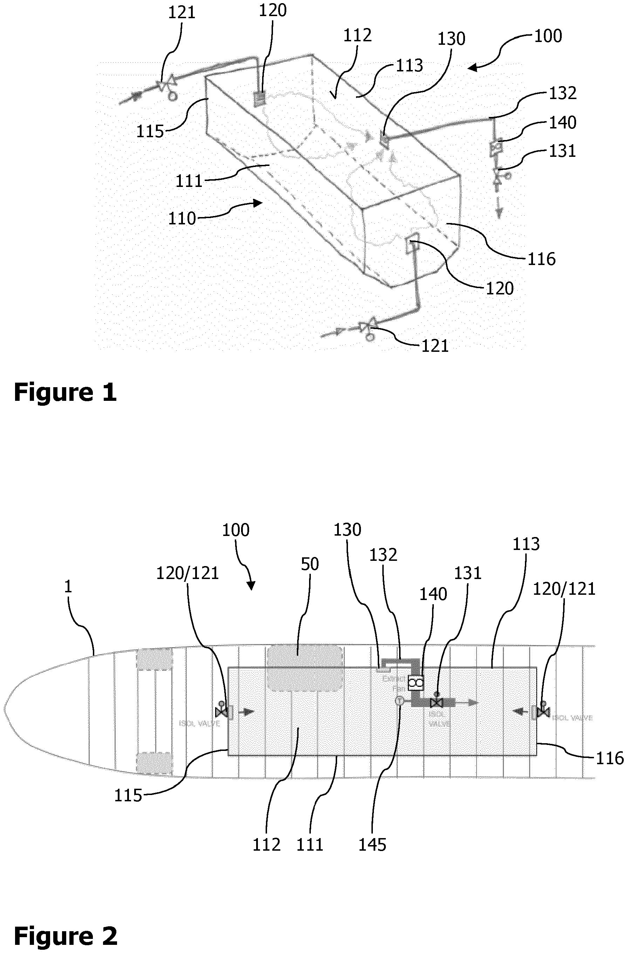

Figure 1 schematically illustrates a perspective view of an exemplary cargo hold lining assembly 100 (also referred to as a cargo lining assembly). The cargo lining assembly 100 can be provided in the bottom portion of the aircraft fuselage 1 (cf. Figure 2) forward as well as rearward of the wing box (not illustrated).

The cargo lining assembly 100 comprises a first longitudinal sidewall 111 and a second longitudinal sidewall 113 arranged parallel to the first longitudinal sidewall 111. At respective forward and rearward ends of the cargo lining assembly 100 there is arranged a first transverse sidewall 115 connecting the first and second longitudinal sidewalls 111, 113 and a second transverse sidewall 116 connecting the first and second longitudinal sidewalls 111, 113. The cargo lining assembly 100 further comprises a ceiling panel 112 connecting the first and second longitudinal sidewalls 111, 113 and the first and second transverse sidewalls 115, 116. Thus, a box-shaped structure is formed by the sidewalls 111, 113, 115, 116 and the ceiling panel 112.

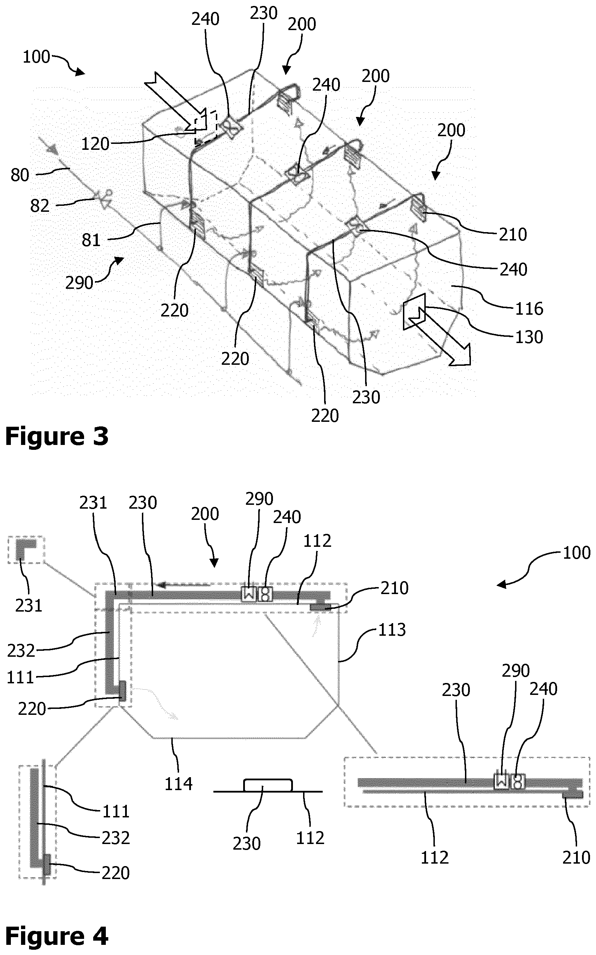

It is to be understood that the cargo lining assembly 100 can further comprise a bottom 114 (see for example Figure 4), although it is does not play a role for the disclosed cargo lining assembly 100. The cargo lining assembly 100 can be airtight, in that the sidewalls 111, 113, 115, 116, ceiling panel 112 and bottom 114 are respectively connected to one another in an airtight manner.

Ventilation of the interior of the cargo lining assembly 100 or cargo hold is achieved by providing a ventilation inlet 120 arranged in the first transverse sidewall 115, and providing a ventilation outlet 130. The ventilation outlet 130 can be provided anywhere. It is, however, preferred to have the ventilation inlet 120 and ventilation outlet 130 spaced apart from one another, so that air entering the cargo hold 100 at the ventilation inlet 120 streams through a large portion of or the complete interior of the cargo hold 100 before it reaches the ventilation outlet 130, so that at least a majority of the interior space of the cargo hold 100 is ventilated.

In the example of Figure 1 the ventilation outlet 130 is arranged in the second longitudinal sidewall 113, which is only one possible location. For instance, the ventilation outlet 130 is arranged in a centre (middle) of the second longitudinal sidewall 113. Furthermore, the cargo lining assembly 100 further comprises a further ventilation inlet 120 arranged in the second transverse sidewall 116. Thus, air entering the interior of the cargo hold 100 through both ventilation inlets 120 can ventilate the entire cargo hold 100 before being extracted at the ventilation outlet 130 (interior air paths being illustrated by light grey arrows).

As can be derived from Figure 1, at least one sidewall, here the first longitudinal sidewall 111, is free of any ventilation components. As will be outlined in more detail below, there is no necessity to provide multiple conventional air inlets and outlets 72 along each longitudinal side wall 111, 113 (as illustrated in Figure 7).

The ventilation inlet(s) 120 can be provided with fresh air via a respective duct and supply valve 121. The supply valve 121 also functions as an isolation valve, in order to achieve a predetermined pressure inside of the airtight cargo hold 100, such as an underpressure, i.e., a pressure lower than in the exterior region around the cargo hold 100.

Likewise, a duct is provided for receiving the extracted air at the ventilation outlet 130, and an extraction valve 131 can be provided that can also function as an isolation valve.

Furthermore, a conveying device 140 can be provided at the ventilation outlet 130 or in the corresponding duct as illustrated, in order to extract air from the interior space of the cargo hold 100. Alternatively or additionally, a conveying device (not illustrated) can be provided with the ventilation inlet(s) 120 and/or the corresponding duct(s).

Figure 2 schematically illustrates a top view of the cargo lining assembly 100 of Figure 1 and provides further details as well as some exemplary aspects of the cargo lining assembly 100. Specifically, the isolation valves 121 at the respective ventilation inlet 120 are illustrated as being provided directly at the respective ventilation inlet 120.

An extraction duct 132 extracting air from the ventilation outlet 130 is illustrated as being arranged on top of the cargo hold 100, such as on top of the ceiling panel 112. Alternatively, the duct 132 may be arranged underneath the cargo hold 100, i.e., underneath the bottom 114, and/or along the second longitudinal sidewall 113.

Figure 2 further illustrates a temperature sensor 145 that is configured to measure a temperature of the extracted air in the extraction duct 132.

The aircraft 1, particularly its fuselage, may comprise a cargo door 50 (illustrated with dashed line and grey shading). As can be derived from Figure 2, the cargo lining assembly 100 does not require any ventilation inlet/outlet 120, 130 in the second longitudinal sidewall 113 in a region of the cargo door 50 and does not require any ventilation inlet/outlet 120, 130 in the entire first longitudinal sidewall 111.

In conventional cargo holds 10 (see Figure 7) multiple air inlets 72 are provided along, for example, a first longitudinal sidewall (such as sidewall 111 in Figure 2), and multiple air outlets are provided along, for example, a second longitudinal sidewall (such as sidewall 113 in Figure 2). The air outlets and inlets can be pairwise opposite to one another. However, in the region of the aircraft door 50, a conventional cargo hold 10 does not allow provision of, for example, an air outlet, since in this region any ducting and the like in the triangle area 30 has to be interrupted due to the opening in the fuselage 1 at the cargo door 50. Thus, the ventilation in this area of the cargo hold 10 is deteriorated.

The disclosed cargo lining assembly 100, on the other hand, allows a good ventilation of the cargo hold 100, while significantly reducing the number of ventilation inlets and outlets 120, 130 and, particularly, significantly reducing the ducting required in the triangle areas 30.

Figure 3 schematically illustrates a perspective view of the exemplary cargo lining assembly 100. A first difference to the cargo lining assembly 100 illustrated in Figure 1 is that in Figure 3 the ventilation outlet 130 is arranged in the second transverse sidewall 116. Thus, a single ventilation inlet 120 and single ventilation outlet 130 is sufficient to ventilate the entire interior space of the cargo hold 100.

A further feature of the cargo lining assembly 100 in Figure 3 is the provision of an air recirculation system 200 that is independent from the ventilation inlet 120 and the ventilation outlet 130. It is to be understood that such air recirculation system 200 is likewise provided in the example of Figure 1, where it has been omitted for sake of clarity of the drawing.

Returning to the air recirculation system 200, it comprises a recirculation outlet 210, and a recirculation inlet 220 fluidly connected by a recirculation air duct 230. The recirculation outlet 210, as indicated by the arrows in Figure 3, receives/extracts air from the interior space of the cargo hold 100. The recirculation outlet 210 can be provided in the first longitudinal sidewall 111, and/or the second longitudinal sidewall 113, and/or the ceiling panel 112. In Figure 3 the recirculation outlet 210 is exemplarily illustrated as being arranged in the second longitudinal sidewall 113. The recirculation inlet 220 can be provided in the first longitudinal sidewall 111, and/or the second longitudinal sidewall 113, and/or the ceiling panel 112, at a location different from the location of the recirculation outlet 210. In other words, the recirculation outlet 210 and the recirculation inlet 220 are spaced apart from one another. As a mere example, the recirculation outlet and inlet 210, 220 can be provided at different locations, including on different sidewalls/panels constituting the cargo lining assembly 100. This spaced apart arrangement provides for a circulation of air between the recirculation inlet 220 and recirculation outlet 210 inside of the cargo hold 100.

The air recirculation system 200 further comprises a recirculation conveying device 240 configured to convey air from the recirculation outlet 210 to the recirculation inlet 220 through the recirculation air duct 230. Thus, a circle of the air stream is generated, partially inside of the cargo hold 100 and partially outside of the cargo hold 100, i.e., inside of the recirculation air duct 230.

As exemplarily illustrated in Figure 3, a plurality of air recirculation systems 200 are provided along the longitudinal direction of the cargo hold 100, and each independent of the ventilation inlet 120 and ventilation outlet 130. The orientation of an air recirculation system 200 can be substantially along a transverse direction of the cargo lining assembly 100. Thus, besides the longitudinal airstream between ventilation inlet and outlet 120, 130, a transverse air stream can be generated inside of the cargo hold 100, which facilitates ventilation of the entire interior space of the cargo hold 100.

Furthermore, Figure 3 illustrates an optional feature of the cargo lining assembly 100. Specifically, a heater 290 is provided that is configured to heat air in the recirculation air duct 230. The exemplary heater 290 is provided by a trim tapping system having a trim air duct 80, and trim air branches 81. Each trim air branch 81 is in fluid connection with one recirculation air duct 230, and allows supplying trim air (i.e., hot air, such as bleed air) into the cargo hold 100 via the recirculation air duct(s) 230.

As a mere example, a trim air valve 82 may be used to control the mass flow of trim air supplied into the recirculation air duct(s) 230. It is to be understood that instead of the illustrated single trim air valve 82, each branch 81 can be provided with its own respective valve (not illustrated). This facilitates finer control of the temperature inside of the cargo hold 100, particularly within the sections of the cargo hold 100 along the longitudinal direction and corresponding to the air recirculation systems 200.

Furthermore, a temperature sensor (not illustrated) can be provided at or in the recirculation air duct 230 that is configured to measure a temperature of the (extracted) air in the recirculation air duct 230. By providing a respective temperature sensor in each recirculation air duct 230, the temperature along the longitudinal direction of the cargo hold 100 can be determined in each area recirculation system 200 and can likewise be controlled by the respective heater 290.

Figure 4 schematically illustrates a cross-sectional view and details of the cargo lining assembly 100 of Figure 3 as well as a different feature, particularly a different kind of heater 290. Other features provided with the same reference numerals are the same and are not explained here for sake of brevity.

Specifically, the air recirculation system 200 of the example of Figure 4 has the recirculation outlet 210 provided in the ceiling panel 112, and the recirculation inlet 220 provided in a bottom region of the first longitudinal sidewall 111. Accordingly, the recirculation air duct 230 runs along the ceiling panel 112 and the first longitudinal sidewall 111 (as well as around a corner between the ceiling panel 112 and the first longitudinal sidewall 111). The recirculation air duct 230, hence, can have three sections, horizontal section 230 on top of the ceiling panel 112, a bent section 231 at the corner, and vertical section 232 next to the first longitudinal sidewall 111.

As can be derived from the details in the dashed rectangles, the recirculation air duct 230 can be provided on top of an exterior surface of the associated panel 112 and sidewall 111. In other words, the recirculation air duct 230 is mounted on top of the respective panel and the sidewall 112, 111. This mounting can include a direct mounting or are spaced apart mounting. Furthermore, the recirculation air duct 230 can have a continuous cross-sectional sidewall.

As can be further derived from the detail in the centre of Figure 4 showing a cross-section of another exemplary recirculation air duct 230, the recirculation air duct 230 can be integrated into the ceiling panel 112 as well as in the corresponding sidewall 111. Thus, the sidewall 111 and the ceiling panel 112 form a delimiting wall of the recirculation air duct 230 in the respective portion. Therefore, the addition of the recirculation air duct 230 compared to conventional cargo holds 10 does not significantly increase the exterior dimensions/size of the cargo hold 100 of the present disclosure.

Figure 4 further illustrates a heater 290 provided in the recirculation air duct 230. As a mere example, an electric heater 290 can be provided with a heating element being arranged inside or at an interior surface of the recirculation air duct 230. The electric heater 290 can, for example, be arranged close to or can be integrated with the recirculation conveying device 240, as they are the sole components of the air recirculation system 200 requiring electric current. A temperature sensor (not illustrated) can also be provided with the recirculation conveying device 240 to allow dedicated control of the heater 290.

Furthermore, a heat dissipation portion of the heater 290 can be arranged in the recirculation air duct 230, such heat dissipation portion can be a surface or element that is heated and is arranged inside of the recirculation air duct 230 or inside a component forming an interior surface of the recirculation air duct 230.

As a mere example, the cargo lining assembly 100 including the recirculation air duct 230 can be made of a composite plastic material, such as a fibre reinforced plastic material. The heat dissipating portion of the heater 290 can then be integrated into the composite plastic material. As a mere example, an electrical conductive element or layer configured to generate heat can be integrated in the fibre reinforced plastic material. Thus, a compact cargo lining assembly 100 can be provided with an effective heating.

In case of the example of Figure 3, the trim air from branches 81 can likewise be introduced into a heat exchanger forming an interior surface of the recirculation air duct 230, i.e. forming a heat dissipation portion of the heater 290. Thus, the trim air may not necessarily be introduced into the cargo hold 100, but may only be used to heat the air conveyed inside of recirculation air duct 230.

It is to be understood that the recirculation inlet and outlet 220, 210 can also be provided in the bottom 114, if it facilitates circulation inside of the cargo hold 100. The bottom 114 is usually used to roll or otherwise transport cargo thereon, so that the provision of a recirculation inlet or outlet 220, 210 is not explained in detail in this disclosure.

In any case, the ventilation of the cargo hold 100 is independent of the heating of the interior space of the cargo hold 100. This simplifies the ducting for providing fresh air into the cargo hold 100, such as for supplying air to ventilation inlet 120 and extracting air at the ventilation outlet 130.

Figure 5 schematically illustrates a top view of a part of the cargo lining assembly 100 of Figure 3. For sake of clarity of the drawing, the ventilation system, particularly ventilation inlet and outlet 120, 130 has been omitted. As can be derived from the illustration of Figure 5, along the longitudinal sidewalls 111, 113 there is no ventilation equipment required. In case the ventilation outlet 130 is provided at one of the longitudinal sidewalls 111, 113 (as in Figures 1 and 2), the corresponding ducting can be kept to a minimum and saves space.

Figure 6 schematically illustrates an aircraft section and a portion of an exemplary cargo lining assembly 100. Figure 7 schematically illustrates a conventional triangle area 30 of an aircraft 1 as well as a portion of a conventional cargo holds 10. Figures 6 and 7 are provided next to one another, in order to illustrate the differences and advantages of the present disclosure.

Specifically, the triangle area 30 of the aircraft 1, according to the present disclosure, is almost free of any conventional ducting (70 - 74 in Figure 7) required to ventilate and heat the interior space of the cargo hold 100. As indicated above with respect to Figure 4, the trim air duct 80 can even be omitted, for example, when employing an electric heater 290 in the recirculation air duct 230.

Turning back to Figure 6, the air recirculation system 200 can be provided in a very space-saving manner. For instance, the recirculation air duct 230 on top of the ceiling panel 112 can be provided in areas between two adjacent floor beams 5 (when viewed along the longitudinal direction of the cargo lining assembly 100). In other words, an overlapping area 5A above an underside of the floor beams 5 can be employed to arrange the recirculation air duct 230 (illustrated by a dashed line indicating the top of the recirculation air duct 230).

It is to be understood that the vertical recirculation air duct 232 can likewise be provided in an area overlapping with the Z-strut 6, although this is not illustrated in Figure 6 for clarity reasons.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A cargo hold lining assembly (100) for an aircraft (1), comprising:
a first longitudinal sidewall (111);
a second longitudinal sidewall (113) arranged parallel to the first longitudinal sidewall;
a first transverse sidewall (115) connecting the first and second longitudinal sidewalls;
a second transverse sidewall (116) connecting the first and second longitudinal sidewalls;
a ceiling panel (112) connecting the first and second longitudinal sidewalls and the first and second transverse sidewalls;
a ventilation inlet (120) arranged in the first transverse sidewall (115);
a ventilation outlet (130) arranged in the second longitudinal sidewall (113) or in the second transverse sidewall (116); and
an air recirculation system (200) that is independent from the ventilation inlet (120) and the ventilation outlet (130),
wherein the air recirculation system (200) comprises:
a recirculation outlet (210) provided in one of the first longitudinal sidewall (111), the second longitudinal sidewall (113) and the ceiling panel (112);
a recirculation inlet (220) provided in one of the first longitudinal sidewall (111), the second longitudinal sidewall (113) and the ceiling panel (112) at a location different from the location of the recirculation outlet (210);
a recirculation air duct (230) fluidly connecting the recirculation outlet and the recirculation inlet and arranged along an outer surface of the cargo lining assembly (100); and
a recirculation conveying device (240) configured to convey air from the recirculation outlet (210) to the recirculation inlet (220) through the recirculation air duct (230).

2. The cargo hold lining assembly (100) of claim 1, wherein the recirculation air duct (230) is integrated into one or more of the first longitudinal sidewall (111), the second longitudinal sidewall (113) and the ceiling panel (112),
wherein, preferably, the one or more of the first longitudinal sidewall (111), the second longitudinal sidewall (113) and the ceiling panel (112) forms a delimiting wall of the recirculation air duct (230).

3. The cargo hold lining assembly (100) of claim 1 or 2, wherein the recirculation outlet (210) is arranged in an upper region of the second longitudinal sidewall (115) or in the ceiling panel (112), and
wherein the recirculation inlet (220) is arranged in a lower region of the first longitudinal sidewall (111).

4. The cargo hold lining assembly (100) of one of claims 1 to 3, further comprising:
a heater (290) configured to heat air in the recirculation air duct (230).

5. The cargo hold lining assembly (100) of claim 4, wherein a heat dissipating portion of the heater (290) is arranged in the recirculation air duct (230).

6. The cargo hold lining assembly (100) of claim 5, when dependent on claim 2, wherein the recirculation air duct and/or the one or more of the first longitudinal sidewall (111), the second longitudinal sidewall (113) and the ceiling panel (112) forming a delimiting wall of the recirculation air duct (230) is made of a composite plastic material, and
wherein the heat dissipating portion of the heater (290) is integrated in the composite plastic material.

7. The cargo hold lining assembly (100) of one of claims 1 to 6, wherein the ventilation outlet is arranged in the second longitudinal sidewall (113), and the cargo lining assembly (100) further comprises:
a further ventilation inlet (120) arranged in the second transverse sidewall (116).

8. An aircraft section (20), comprising:
a cabin floor cross beam (5); and
a cargo hold lining assembly (100) of one of claims 1 to 7,
wherein at least a portion of the recirculation air duct (230) of the cargo lining assembly (100) is arranged at a vertical position overlapping with a portion of the cabin floor cross beam (5).

9. The aircraft section (20) of claim 8, further comprising:
a vertical strut (6) supporting the cabin floor cross beam (5),
wherein at least a portion of the recirculation air duct (230) is arranged at a horizontal position overlapping with a portion of the vertical strut (6).

10. The aircraft section (20) of claim 8 or 9, further comprising:
a frame (7) supporting the vertical strut (6);
a trim air duct (80) conveying heated air; and
at least one trim air connecting duct (81) fluidly connecting the trim air duct (80) with the recirculation air duct (230),
wherein the cabin floor cross beam (5) is connected to the frame (7),
wherein the cabin floor cross beam (5), the vertical strut (6) and the frame (7) delimit a triangular space (30) of the aircraft section, and
wherein the trim air duct (80) is arranged in the triangular space (30) of the aircraft section (20).

11. An aircraft (1), comprising:
at least one cargo hold lining assembly (100) of one of claims 1 to 7; and/or
at least one aircraft section (20) of one of claims 8 to 10.

## Patentansprüche

1. Frachtraumauskleidungsanordnung (100) für ein Flugzeug (1), umfassend:
eine erste Längsseitenwand (111);
eine zweite Längsseitenwand (113), die parallel zu der ersten Längsseitenwand angeordnet ist;
eine erste Querseitenwand (115), die die erste und die zweite Längsseitenwand verbindet;
eine zweite Querseitenwand (116), die die erste und die zweite Längsseitenwand verbindet;
eine Deckenplatte (112), die die erste und die zweite Längsseitenwand und die erste und die zweite Querseitenwand verbindet;
einen Belüftungseinlass (120), der in der ersten Querseitenwand (115) angeordnet ist;
einen Belüftungsauslass (130), der in der zweiten Längsseitenwand (113) oder in der zweiten Querseitenwand (116) angeordnet ist; und
ein Luftrezirkulationssystem (200), das von dem Belüftungseinlass (120) und dem Belüftungsauslass (130) unabhängig ist,
wobei das Luftrezirkulationssystem (200) Folgendes umfasst:
einen Rezirkulationsauslass (210), der in einer von der ersten Längsseitenwand (111), der zweiten Längsseitenwand (113) und der Deckenplatte (112) bereitgestellt ist;
einen Rezirkulationseinlass (220), der in einer von der ersten Längsseitenwand (111),
der zweiten Längsseitenwand (113) und der Deckenplatte (112) an einer Stelle bereitgestellt ist, die sich von der Stelle des Rezirkulationsauslasses (210) unterscheidet;
einen Rezirkulationsluftkanal (230), der den Rezirkulationsauslass und den Rezirkulationseinlass fluidisch verbindet und entlang einer Außenfläche der Frachtauskleidungsanordnung (100) angeordnet ist; und
eine Rezirkulationsfördervorrichtung (240), die dazu konfiguriert ist, Luft von dem Rezirkulationsauslass (210) durch den Rezirkulationsluftkanal (230) zu dem Rezirkulationseinlass (220) zu fördern.

2. Frachtraumauskleidungsanordnung (100) nach Anspruch 1, wobei der Rezirkulationsluftkanal (230) in eine oder mehrere von der ersten Längsseitenwand (111), der zweiten Längsseitenwand (113) und der Deckenplatte (112) integriert ist, wobei vorzugsweise die eine oder die mehreren von der ersten Längsseitenwand (111), der zweiten Längsseitenwand (113) und der Deckenplatte (112) eine Begrenzungswand des Rezirkulationsluftkanals (230) bilden.

3. Frachtraumauskleidungsanordnung (100) nach Anspruch 1 oder 2, wobei der Rezirkulationsauslass (210) in einem oberen Bereich der zweiten Längsseitenwand (115) oder in der Deckenplatte (112) angeordnet ist und
wobei der Rezirkulationseinlass (220) in einem unteren Bereich der ersten Längsseitenwand (111) angeordnet ist.

4. Frachtraumauskleidungsanordnung (100) nach einem der Ansprüche 1 bis 3, ferner umfassend:
eine Heizung (290), die dazu konfiguriert ist, Luft in dem Rezirkulationsluftkanal (230) zu erwärmen.

5. Frachtraumauskleidungsanordnung (100) nach Anspruch 4, wobei ein Wärmeabgabeteil der Heizung (290) in dem Rezirkulationsluftkanal (230) angeordnet ist.

6. Frachtraumauskleidungsanordnung (100) nach Anspruch 5, wenn abhängig von Anspruch 2, wobei der Rezirkulationsluftkanal und/oder die eine oder die mehreren von der ersten Längsseitenwand (111), der zweiten Längsseitenwand (113) und der Deckenplatte (112), die eine Begrenzungswand des Rezirkulationsluftkanals (230) bilden, aus einem Verbundkunststoffmaterial hergestellt sind und
wobei der Wärmeabgabeteil der Heizung (290) in das Verbundkunststoffmaterial integriert ist.

7. Frachtraumauskleidungsanordnung (100) nach einem der Ansprüche 1 bis 6, wobei der Belüftungsauslass in der zweiten Längsseitenwand (113) angeordnet ist und die Frachtauskleidungsanordnung (100) ferner Folgendes umfasst:
einen weiteren Belüftungseinlass (120), der in der zweiten Querseitenwand (116) angeordnet ist.

8. Flugzeugabschnitt (20), umfassend:
einen Kabinenbodenquerträger (5); und
eine Frachtraumauskleidungsanordnung (100) nach einem der Ansprüche 1 bis 7,
wobei mindestens ein Teil des Rezirkulationsluftkanals (230) der Frachtauskleidungsanordnung (100) an einer vertikalen Position angeordnet ist, die mit einem Teil des Kabinenbodenquerträgers (5) überlappt.

9. Flugzeugabschnitt (20) nach Anspruch 8, ferner umfassend:
eine vertikale Strebe (6), die den Kabinenbodenquerträger (5) stützt,
wobei mindestens ein Teil des Rezirkulationsluftkanals (230) an einer horizontalen Position angeordnet ist, die mit einem Teil der vertikalen Strebe (6) überlappt.

10. Flugzeugabschnitt (20) nach Anspruch 8 oder 9, ferner umfassend:
einen Rahmen (7), der die vertikale Strebe (6) stützt;
einen Trimmluftkanal (80), der erwärmte Luft fördert; und
mindestens einen Trimmluftverbindungskanal (81), der den Trimmluftkanal (80) mit dem Rezirkulationsluftkanal (230) fluidisch verbindet,
wobei der Kabinenbodenquerträger (5) mit dem Rahmen (7) verbunden ist,
wobei der Kabinenbodenquerträger (5), die vertikale Strebe (6) und der Rahmen (7) einen dreieckigen Raum (30) des Flugzeugabschnitts begrenzen und
wobei der Trimmluftkanal (80) in dem dreieckigen Raum (30) des Flugzeugabschnitts (20) angeordnet ist.

11. Flugzeug (1), umfassend:
mindestens eine Frachtraumauskleidungsanordnung (100) nach einem der Ansprüche 1 bis 7; und/oder
mindestens einen Flugzeugabschnitt (20) nach einem der Ansprüche 8 bis 10.

## Revendications

1. Ensemble de revêtement de soute (100) pour un aéronef (1), comprenant :
un première paroi latérale longitudinale (111) ;
une deuxième paroi latérale longitudinale (113) agencée parallèlement à la première paroi latérale longitudinale ;
une première paroi latérale transversale (115) reliant les première et deuxième parois latérales longitudinales ;
une deuxième paroi latérale transversale (116) reliant les premières et deuxième parois latérales longitudinales ;
un panneau de plafond (112) reliant les première et deuxième parois latérales longitudinales et les première et deuxième parois latérales transversales ;
une entrée de ventilation (120) agencée dans la première paroi latérale transversale (115) ;
une sortie de ventilation (130) agencée dans la deuxième paroi latérale longitudinale (113) ou dans la deuxième paroi latérale transversale (116) ; et
un système de recirculation d'air (200) indépendant de l'entrée de ventilation (120) et de la sortie de ventilation (130),
dans lequel le système de recirculation d'air (200) comprend :
une sortie de recirculation (210) prévue dans soit la première paroi latérale longitudinale (111), soit la deuxième paroi latérale longitudinale (113), soit le panneau de plafond (112) ;
une entrée de recirculation (220) prévue dans soit paroi la première latérale longitudinale (111), soit la deuxième paroi latérale longitudinale (113), soit le panneau de plafond (112) à un emplacement différent de l'emplacement de la sortie de recirculation (210) ;
un conduit d'air de recirculation (230) reliant fluidiquement la sortie de recirculation et l'entrée de recirculation et agencé le long d'une surface extérieure de l'ensemble de revêtement de soute (100) ; et
un dispositif transport de recirculation (240) configuré pour transporter de l'air depuis la sortie de recirculation (210) vers l'entrée de recirculation (220) à travers le conduit d'air de recirculation (230).

2. Ensemble de revêtement de soute (100) selon la revendication 1, dans lequel le conduit d'air de recirculation (230) est intégré dans un ou plusieurs des éléments suivants : la première paroi latérale longitudinale (111), la deuxième paroi latérale longitudinale (113) et le panneau de plafond (112),
dans lequel, de préférence, le ou les éléments parmi la première paroi latérale longitudinale (111), la deuxième paroi latérale longitudinale (113) et le panneau de plafond (112) forment une paroi de délimitation du conduit d'air de recirculation (230).

3. Ensemble de revêtement de soute (100) selon la revendication 1 ou 2, dans lequel la sortie de recirculation (210) est agencée dans une région supérieure de la deuxième paroi latérale longitudinale (115) ou dans le panneau de plafond (112), et dans lequel l'entrée de recirculation (220) est agencée dans une zone inférieure de la première paroi latérale longitudinale (111).

4. Ensemble de revêtement de soute (100) selon l'une des revendications 1 à 3, comprenant en outre :
un dispositif de chauffage (290) configuré pour chauffer l'air dans le conduit d'air de recirculation (230).

5. Ensemble de revêtement de soute (100) selon la revendication 4, dans lequel une partie dissipant la chaleur du dispositif de chauffage (290) est disposée dans le conduit d'air de recirculation (230).

6. Ensemble de revêtement de soute (100) selon la revendication 5, lorsqu'elle dépend de la revendication 2, dans lequel le conduit d'air de recirculation et/ou l'un ou plusieurs éléments parmi la première paroi latérale longitudinale (111), la deuxième paroi latérale longitudinale (113) et le panneau de plafond (112) formant une paroi de délimitation du conduit d'air de recirculation (230) sont faits en une matière plastique composite, et
dans lequel la partie dissipant la chaleur du dispositif de chauffage (290) est intégrée dans le matériau plastique composite.

7. Ensemble de revêtement de soute (100) selon l'une des revendications 1 à 6, dans lequel la sortie de ventilation est agencée dans la deuxième paroi latérale longitudinale (113), et l'ensemble de revêtement de soute (100) comprenant en outre :
une autre entrée de ventilation (120) disposée dans le deuxième flanc transversal (116).

8. Section d'aéronef (20), comprenant :
une traverse de plancher de cabine (5) ; et
une pluralité d'ensembles de revêtement de soute (100) selon l'une des revendications 1 à 7,
dans laquelle au moins une partie du conduit d'air de recirculation (230) de l'ensemble de revêtement de soute (100) est agncée dans une position verticale chevauchant une partie de la traverse de plancher de cabine (5).

9. Section d'aéronef (20) selon la revendication 8, comprenant en outre :
un montant vertical (6) supportant la traverse de plancher de cabine (5),
dans laquelle au moins une partie du conduit d'air de recirculation (230) est agencée dans une position horizontale chevauchant une partie du montant vertical (6).

10. Section d'aéronef (20) selon la revendication 8 ou 9, comprenant en outre :
un bâti (7) supportant le montant vertical (6) ;
un conduit d'air d'équilibrqge (80) acheminant de l'air chauffé ; et
au moins un conduit de liaison d'air d'équilibrage (81) reliant fluidiquement le conduit d'air d'équilibrage (80) au conduit d'air de recirculation (230),
dans laquelle la traverse de plancher de cabine (5) est reliée au bâti (7),
dans laquelle la traverse de plancher de cabine (5), le montant vertical (6) et le bâti (7) délimitent un espace triangulaire (30) de la section d'aéronef, et
dans laquelle le conduit d'air d'équilibrage (80) est agencé dans l'espace triangulaire (30) de la section d'aéronef (20).

11. Aéronef (1), comprenant :
au moins un ensemble de revêtement de soute (100) selon l'une des revendications 1 à 7 ; et/ou
au moins une section d'aéronef (20) selon l'une des revendications 8 à 10.
